# EUROPEAN PATENT APPLICATION

(11) **EP 3 591 823 A1**
(43) Date of publication of application: **08.01.2020**
(21) Application number: 18761917.6
(22) Date of filing: 01.03.2018
(51) Int. Cl.: H02M 3/156

(54) **COMBINED DC-DC CONVERTER FOR USE IN HYBRID POWER SYSTEM**

(30) Priority: 03.03.2017 CN 201710123877
(71) Applicant: Eaton Intelligent Power Limited, Dublin 4 (IE)
(72) Inventor: HO, Andraw, Taoyuan 330 (TW); CHIEN, Martin, Taipei City 114 (TW); WENG, Edison, Taipei City 116 (TW); ROUDET, Fabrice, 1025 Saint Sulpice (CH)
(74) Representative: Wagner & Geyer
(86) International application number: PCT/CN2018/077775
(87) International publication number: WO 2018/157838

(57) **Abstract**

A combined DC-DC converter (2) for use in a hybrid power supply system, the hybrid power supply system comprising: a renewable energy power generation device (21), a rechargeable battery (24), an energy storage capacitor (23), and an inverter (26) which is connected to the energy storage capacitor. The combined DC-DC converter comprises: a first bidirectional DC-DC converter (22) and a second bidirectional DC-DC converter (25), output terminals of the first and second bidirectional DC-DC converters being configured to be connected to the energy storage capacitor; and a switch group (27), which is configured for use in connecting input terminals of the first and second bidirectional DC-DC converters to the renewable energy power generation device or to two ends of the rechargeable battery, or connecting the input terminals of the first and second bidirectional DC-DC converters to the renewable energy power generation device or two ends of the rechargeable battery, respectively. The combined DC-DC converter has a small size, is light weight and is low cost.

## Description

### TECHNICAL FIELD

The present invention relates to the field of power electronics, and in particular to a combined DC-DC converter for use in a hybrid power supply system.

### BACKGROUND

Since an independent photovoltaic system is subjected to environmental factors such as solar radiation intensity and temperature, photovoltaic power generation has the disadvantages such as time dependency and discontinuity, and therefore cannot provide the required electric energy to a load stably. These defects of the independent photovoltaic system can be overcome by a photovoltaic-storage hybrid power generation system into which a battery-based energy storage system is introduced.

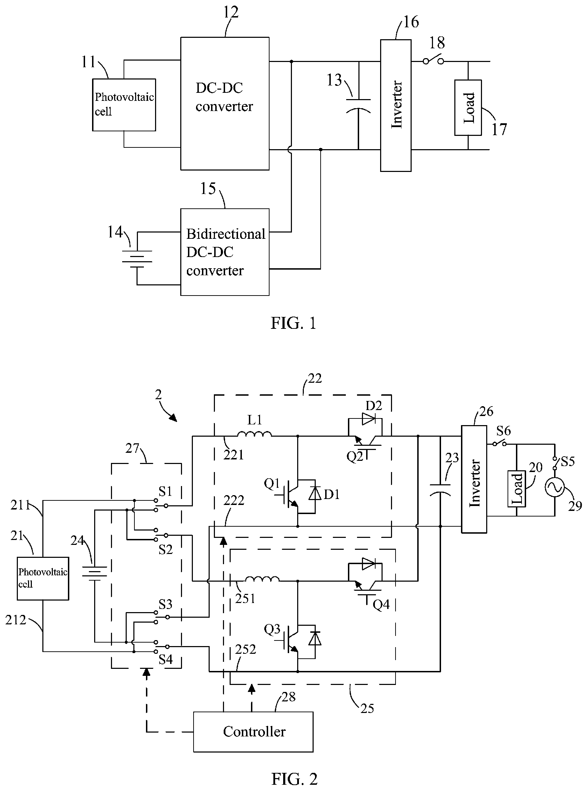

FIG. 1 is a block diagram of a photovoltaic-storage hybrid power generation system in the prior art. As shown in FIG. 1, a photovoltaic cell 11 is connected to the two ends of an energy storage capacitor 13 by a DC-DC converter 12; a rechargeable battery 14 is connected to the two ends of the energy storage capacitor 13 by a bidirectional DC-DC converter 15; and the input end of an inverter 16 is connected to the two ends of the energy storage capacitor 13, and the output end is connected to a load 17 by a switch 18.

In the photovoltaic-storage hybrid power generation system in FIG. 1, when sunlight is sufficient, the DC-DC converter 12 is controlled to raise the DC voltage at the two ends of the photovoltaic cell 11 to a predetermined DC bus voltage to store, in the energy storage capacitor 13, the electric energy from the photovoltaic cell 11, thus providing the required AC to the load 17 via the inverter 16; and the bidirectional DC-DC converter 15 is controlled to lower the voltage at the two ends of the energy storage capacitor 13 to a required charging voltage to charge the rechargeable battery 14 by using the electric energy in the energy storage capacitor 13. When sunlight is insufficient or absent, the bidirectional DC-DC converter 15 is controlled to raise the voltage at the two ends of the rechargeable battery 14 to the DC bus voltage to store, in the energy storage capacitor 13, the electric energy from the rechargeable battery 14, thus providing the required AC to the load 17 via the inverter 16.

Assuming that the rated power of the load 17 is 6 KW, in order to provide 6 KW electric energy to the load 17 continuously and stably, the DC-DC converter 12 greater than 6 KW and the bidirectional DC-DC converter 15 greater than 6 KW must be selected. A person skilled in the art should know that the higher the power of the DC-DC converter 12 and the bidirectional DC-DC converter 15, the larger the size, the heavier the weight and the higher the cost.

Therefore, how to reduce the size, weight and cost of the photovoltaic-storage hybrid power generation system while maintaining the output power has become an urgent technical problem to be solved.

### SUMMARY

Aiming at solving the above technical problem in the prior art, an embodiment of the present invention provides a combined DC-DC converter for use in a hybrid power supply system. The hybrid power supply system comprises a renewable energy power generation device, a rechargeable battery, an energy storage capacitor, and an inverter connected to the energy storage capacitor, wherein the combined DC-DC converter comprises:

a first bidirectional DC-DC converter and a second bidirectional DC-DC converter, output ends of the first and second bidirectional DC-DC converters being configured to be connected to the energy storage capacitor; and

a switch group configured to connect input ends of the first and second bidirectional DC-DC converters to the two ends of the renewable energy power generation device or the rechargeable battery, or respectively connect the input ends of the first and second bidirectional DC-DC converters to the two ends of the renewable energy power generation device and the rechargeable battery.

Preferably, the switch group comprises: a first switch configured to connect the positive electrode input end of the first bidirectional DC-DC converter to the positive electrode of the renewable energy power generation device or the rechargeable battery; and a second switch configured to connect the positive electrode input end of the second bidirectional DC-DC converter to the positive electrode of the renewable energy power generation device or the rechargeable battery.

Preferably, the switch group further comprises: a third switch configured to connect the negative electrode input end of the first bidirectional DC-DC converter to the negative electrode of the renewable energy power generation device or the rechargeable battery; and a fourth switch configured to connect the negative electrode input end of the second bidirectional DC-DC converter to the negative electrode of the renewable energy power generation device or the rechargeable battery.

Preferably, the first bidirectional DC-DC converter is the same as the second bidirectional DC-DC converter.

Preferably, the bidirectional DC-DC converter comprises: an inductor; a first switch transistor with a first anti-parallel diode; and a second switch transistor with a second anti-parallel diode, wherein one end of the inductor is connected to the cathode of the first anti-parallel diode and the anode of the second anti-parallel diode.

Preferably, the other end of the inductor and the anode of the first anti-parallel diode are connected to the input end of the first bidirectional DC-DC converter, and the cathode of the second anti-parallel diode and the anode of the first anti-parallel diode are connected to the output end of the first bidirectional DC-DC converter.

Preferably, the combined DC-DC converter for use in the hybrid power supply system further comprises a controller used for controlling the on/off state of the switch group and the working mode of the first and second bidirectional DC-DC converter.

Preferably, when the renewable energy power generation device is capable of providing the power required by a load, the controller is used for: controlling the switch group such that the input ends of the first and second bidirectional DC-DC converters are connected to the two ends of the renewable energy power generation device; and controlling the first and second bidirectional DC-DC converters to convert the voltage at the two ends of the renewable energy power generation device into a predetermined DC bus voltage.

Preferably, when the renewable energy power generation device is not capable of providing the power required by a load and the rechargeable battery has electric energy, the controller is used for: controlling the switch group such that the input ends of the first and second bidirectional DC-DC converters are respectively connected to the two ends of the renewable energy power generation device and the rechargeable battery; and controlling the first bidirectional DC-DC converter to convert the voltage at the two ends of the renewable energy power generation device into a predetermined DC bus voltage, and controlling the second bidirectional DC-DC converter to convert the voltage at the two ends of the rechargeable battery into the predetermined DC bus voltage.

Preferably, when the renewable energy power generation device is not capable of providing electric energy and the rechargeable battery has electric energy, the controller is used for: controlling the switch group such that the input ends of the first and second bidirectional DC-DC converters are connected to the two ends of the rechargeable battery; and controlling the first and second bidirectional DC-DC converters to convert the voltage at the two ends of the rechargeable battery into a predetermined DC bus voltage.

Preferably, when the output power of the renewable energy power generation device is greater than the power of a load and the electric energy of the rechargeable battery is less than a predetermined threshold, the controller is used for: controlling the switch group such that the input ends of the first and second bidirectional DC-DC converters are respectively connected to the two ends of the renewable energy power generation device and the rechargeable battery; and controlling the first bidirectional DC-DC converter to convert the voltage at the two ends of the renewable energy power generation device into a predetermined DC bus voltage, and controlling the second bidirectional DC-DC converter to charge the rechargeable battery.

Preferably, the hybrid power supply system comprises a bypass switch connected in series to an AC power supply. When the renewable energy power generation device has electric energy and the electric energy in the rechargeable battery is less than a predetermined threshold, the controller is used for: controlling the switch group such that the input ends of the first and second bidirectional DC-DC converters are respectively connected to the two ends of the renewable energy power generation device and the rechargeable battery; controlling the bypass switch to be turned on such that the AC power in the AC power supply is rectified and then stored in the energy storage capacitor; and controlling the first bidirectional DC-DC converter to convert the voltage at the two ends of the renewable energy power generation device into a predetermined DC bus voltage, and controlling the second bidirectional DC-DC converter to charge the rechargeable battery by using the electric energy in the energy storage capacitor.

Preferably, the hybrid power supply system comprises a bypass switch connected in series to an AC power supply. When the renewable energy power generation device is not capable of providing electric energy and the electric energy in the rechargeable battery is less than a predetermined threshold, the controller is used for: controlling the switch group such that the input ends of the first and second bidirectional DC-DC converters are connected to the two ends of the rechargeable battery; controlling the bypass switch to be turned on such that the AC power in the AC power supply is rectified and then stored in the energy storage capacitor; and controlling the first and second bidirectional DC-DC converters to charge the rechargeable battery by using the electric energy in the energy storage capacitor.

Preferably, the combined DC-DC converter further comprises: a third bidirectional DC-DC converter connected in parallel to the first bidirectional DC-DC converter, the controller controlling the first and third bidirectional DC-DC converters in the same working mode; or a fourth bidirectional DC-DC converter connected in parallel to the second bidirectional DC-DC converter, the controller controlling the second and fourth bidirectional DC-DC converters in the same working mode.

The combined DC-DC converter provided by the present invention is small in size, light in weight, and has a low cost.

### BRIEF DESCRIPTION OF THE DRAWINGS

Embodiments of the present invention are further illustrated below with reference to the accompanying drawings:
FIG. 1 is a block diagram of a photovoltaic-storage hybrid power generation system in the prior art;
FIG. 2 is a circuit diagram of a hybrid power supply system according to embodiment 1 of the present invention;
FIG. 3 is an equivalent circuit diagram of the hybrid power supply system in FIG. 2 in a first working mode;
FIG. 4 is an equivalent circuit diagram of the hybrid power supply system in FIG. 2 in a second working mode;
FIG. 5 is an equivalent circuit diagram of the hybrid power supply system in FIG. 2 in a third working mode;
FIG. 6 is an equivalent circuit diagram of the hybrid power supply system in FIG. 2 in a fourth working mode;
FIG. 7 is an equivalent circuit diagram of the hybrid power supply system in FIG. 2 in a fifth working mode;
FIG. 8 is an equivalent circuit diagram of the hybrid power supply system in FIG. 2 in a sixth working mode;
FIG. 9 is a circuit diagram of a hybrid power supply system according to embodiment 2 of the present invention; and
FIG. 10 is a circuit diagram of a hybrid power supply system according to embodiment 3 of the present invention.

### DETAILED DESCRIPTION

To make objectives, technical solutions, and advantages of the present invention clearer and more comprehensible, the present invention will be further described in detail below through specific embodiments with reference to the accompanying drawings.

FIG. 2 is a circuit diagram of a hybrid power supply system according to embodiment 1 of the present invention. As shown in FIG. 2, a hybrid power supply consisting of a photovoltaic cell 21 and a rechargeable battery 24 is connected to an energy storage capacitor 23 by a combined DC-DC converter 2. The combined DC-DC converter 2 comprises a switch group 27, a bidirectional DC-DC converter 22 and a bidirectional DC-DC converter 25.

The bidirectional DC-DC converters 22 and 25 are completely the same. Now, description will be made by taking only the bidirectional DC-DC converter 22 as an example. The bidirectional DC-DC converter 22 comprises an inductor L1, a switch transistor Q1 with an anti-parallel diode D1 and a switch transistor Q2 with an anti-parallel diode D2. One end of the inductor L1 is connected to the cathode of the anti-parallel diode D1 and the anode of the anti-parallel diode D2. The inductor L1, the switch transistor Q1 and the anti-parallel diode D2 form a boost circuit, and the inductor L1, the switch transistor Q2 and the anti-parallel diode D1 form a buck circuit.

The switch group 27 comprises four switches, namely S1, S2, S3 and S4. The switches S1 and S3 are controlled to connect the positive electrode input end 221 and the negative electrode input end 222 of the bidirectional DC-DC converter 22 to the photovoltaic cell 21 or the rechargeable battery 24, and the switches S2 and S4 are controlled to connect the positive electrode input end 251 and the negative electrode input end 252 of the bidirectional DC-DC converter 25 to the photovoltaic cell 21 or the rechargeable battery 24.

The combined DC-DC converter 2 further comprises a controller 28, and the controller 28 is used for controlling the switching or on/off state of the switch group 27 and controlling the working mode of the bidirectional DC-DC converters 22 and 25.

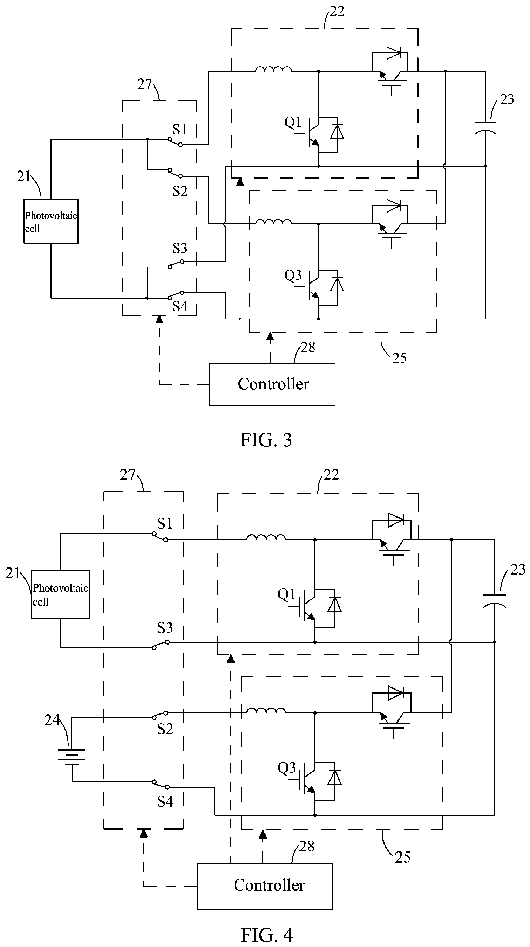

The working modes of the combined DC-DC converter 2 in this embodiment will be described below in detail with reference to FIG. 3 to FIG. 8.

### 1. First working mode

If the power of the load 20 is 6 KW and the electric energy capable of being provided by the photovoltaic cell 21 is 6 KW, the controller 28 controls the switches S1 & S2 to connect the positive electrode 211 of the photovoltaic cell 21 to the positive electrode input ends 221 & 251 of the bidirectional DC-DC converters 22 & 25, and controls the switches S3 & S4 to connect the negative electrode 212 of the photovoltaic cell 21 to the negative electrode input ends 222 & 252 of the bidirectional DC-DC converter 22 & 25.

FIG. 3 illustrates an equivalent circuit diagram of the hybrid power supply system in the first working mode. As illustrated in FIG. 3, the bidirectional DC-DC converters 22 & 25 are connected in parallel between the photovoltaic cell 21 and the energy storage capacitor 23. The controller 28 controls the bidirectional DC-DC converters 22 & 25 to work to provide pulse width modulation signals to the switch transistors Q1 & Q3, respectively raise the DC voltage at the two ends of the photovoltaic cell 21 to the DC voltage required at the two ends of the energy storage capacitor 23 (namely the predetermined DC bus voltage), and meanwhile store, in the energy storage capacitor 23, the electric energy from the photovoltaic cell 21. Since 6 KW electric energy is provided to the energy storage capacitor 23 via the bidirectional DC-DC converters 22 & 25 collectively, the bidirectional DC-DC converters 22 & 25 with lower power (e.g. 3 KW) may be selected.

### 2. Second working mode

If the power of the load 20 is 6 KW, the photovoltaic cell 21 is not capable of providing electric energy with the power of 6 KW and the rechargeable battery 24 has electric energy, the controller 28 controls the switches S1 & S3 such that the positive electrode 211 and negative electrode 212 of the photovoltaic cell 21 are respectively connected to the positive electrode input end 221 and the negative electrode input end 222 of the bidirectional DC-DC converter 22, and controls the switches S2 & S4 such that the positive electrode and negative electrode of the rechargeable battery 24 are respectively connected to the positive electrode input end 251 and negative electrode input end 252 of the bidirectional DC-DC converter 25.

FIG. 4 illustrates an equivalent circuit diagram of the hybrid power supply system in the second working mode. As illustrated in FIG. 4, the controller 28 controls the bidirectional DC-DC converters 22 & 25 to work to provide pulse width modulation signals to the switch transistors Q1 & Q3, respectively raise the DC voltage at the two ends of the photovoltaic cell 21 and the rechargeable battery 24 to the predetermined DC bus voltage, and meanwhile store, in the energy storage capacitor 23, the electric energy from the photovoltaic cell 21 and the rechargeable battery 24. Since 6 KW electric energy is provided to the energy storage capacitor 23 via the bidirectional DC-DC converters 22 & 25 collectively, the bidirectional DC-DC converters 22 & 25 with lower power (e.g. 3 KW) may be selected.

### 3. Third working mode

If the power of the load 20 is 6 KW, the photovoltaic cell 21 is not capable of providing electric energy and the rechargeable battery 24 has electric energy, the controller 28 controls the switches S1 & S2 to connect the positive electrode of the rechargeable battery 24 to the positive electrode input ends 221 & 251 of the bidirectional DC-DC converters 22 & 25, and controls the switches S3 & S4 to connect the negative electrode 212 of the rechargeable battery 24 to the negative electrode input ends 222 & 252 of the bidirectional DC-DC converter 22 & 25.

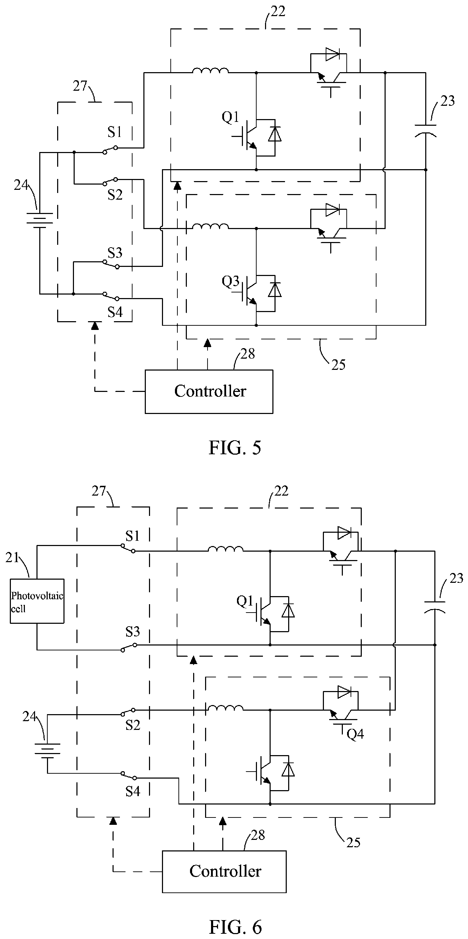

FIG. 5 illustrates an equivalent circuit diagram of the hybrid power supply system in the third working mode. As illustrated in FIG. 5, the bidirectional DC-DC converters 22 & 25 are connected in parallel between the rechargeable battery 24 and the energy storage capacitor 23. The controller 28 controls the bidirectional DC-DC converters 22 & 25 to work to provide pulse width modulation signals to the switch transistors Q1 & Q3, respectively raise the DC voltage at the two ends of the rechargeable battery 24 to the predetermined DC bus voltage, and meanwhile store, in the energy storage capacitor 23, the electric energy from the rechargeable battery 24. Since 6 KW electric energy is provided to the energy storage capacitor 23 via the bidirectional DC-DC converters 22 & 25 collectively, the bidirectional DC-DC converters 22 & 25 with lower power (e.g. 3 KW) may be selected.

### 4. Fourth working mode

If the power of the load 20 is 2 KW, the photovoltaic cell 21 is capable of providing electric energy of 3 KW and the electric energy in the rechargeable battery 24 is less than a predetermined threshold, the controller 28 controls the switches S1 & S3 such that the positive electrode 211 and negative electrode 212 of the photovoltaic cell 21 are respectively connected to the positive electrode input end 221 and the negative electrode input end 222 of the bidirectional DC-DC converter 22, and controls the switches S2 & S4 such that the positive electrode and negative electrode of the rechargeable battery 24 are respectively connected to the positive electrode input end 251 and negative electrode input end 252 of the bidirectional DC-DC converter 25.

FIG. 6 illustrates an equivalent circuit diagram of the hybrid power supply system in the fourth working mode. As illustrated in FIG. 6, the controller 28 controls the bidirectional DC-DC converter 22 to work to provide a pulse width modulation signal to the switch transistor Q1, respectively raise the DC voltage at the two ends of the photovoltaic cell 21 to the predetermined DC bus voltage, and store, in the energy storage capacitor 23, the electric energy from the photovoltaic cell 21. The controller 28 also controls the bidirectional DC-DC converter 25 to work to provide a pulse width modulation signal to the switch transistor Q4, so as to obtain a lowered charging voltage at the input end of the bidirectional DC-DC converter 25, and meanwhile charge the rechargeable battery 24 by using the electric energy in the energy storage capacitor 23.

### 5. Fifth working mode

If the photovoltaic cell 21 is capable of providing electric energy of 2 KW and the electric energy in the rechargeable battery 24 is less than a predetermined threshold, the controller 28 controls the switches S1 & S3 such that the positive electrode 211 and negative electrode 212 of the photovoltaic cell 21 are respectively connected to the positive electrode input end 221 and the negative electrode input end 222 of the bidirectional DC-DC converter 22, controls the switches S2 & S4 such that the positive electrode and negative electrode of the rechargeable battery 24 are respectively connected to the positive electrode input end 251 and negative electrode input end 252 of the bidirectional DC-DC converter 25, and controls a bypass switch S5 and a switch S6 to be turned on such that an AC power supply 29 is connected to the energy storage capacitor 23 by a rectifying device consisting of diodes (not shown) in a full-bridge inverter 26.

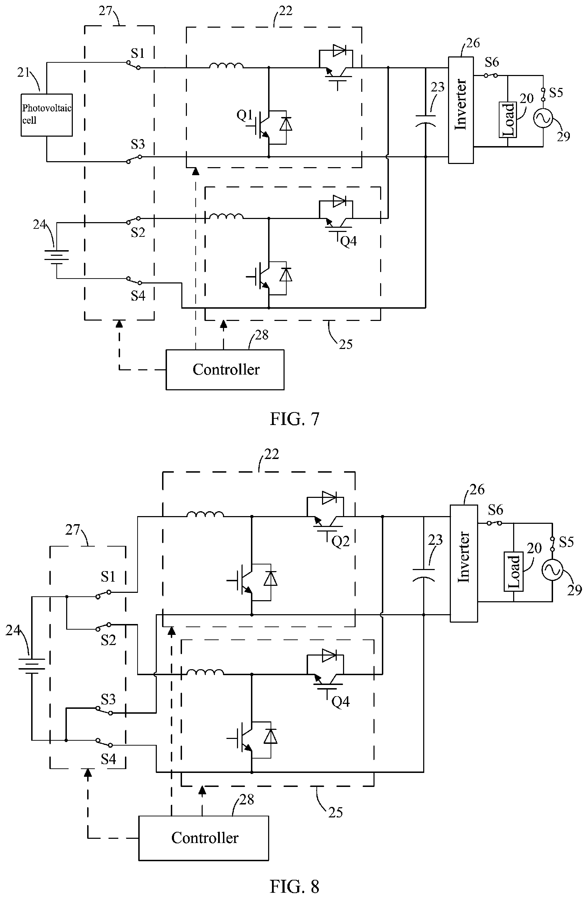

FIG. 7 illustrates an equivalent circuit diagram of the hybrid power supply system in the fifth working mode. As illustrated in FIG. 7, the controller 28 controls the bidirectional DC-DC converter 22 to work to provide a pulse width modulation signal to the switch transistor Q1 to store, in the energy storage capacitor 23, the electric energy from the photovoltaic cell 21, and controls the bidirectional DC-DC converter 25 to work to provide a pulse width modulation signal to the switch transistor Q4 to charge the rechargeable battery 24 by using the electric energy in the energy storage capacitor 23.

### 6. Sixth working mode

If the photovoltaic cell 21 is not capable of providing electric energy and the electric energy in the rechargeable battery 24 is less than a predetermined value, the controller 28 controls the switches S1 & S2 such that the positive electrode of the rechargeable battery 24 is connected to the positive electrode input end 221 & 251 of the bidirectional DC-DC converter 22 & 25, controls the switches S3 & S4 such that the negative electrode of the rechargeable battery 24 is connected to the negative electrode input end 222 & 252 of the bidirectional DC-DC converter 22 & 25, and controls a bypass switch S5 and a switch S6 to be turned on such that an AC power supply 29 is connected to the energy storage capacitor 23 by a rectifying device consisting of diodes in a full-bridge inverter 26.

FIG. 8 illustrates an equivalent circuit diagram of the hybrid power supply system in the sixth working mode. As illustrated in FIG. 8, the controller 28 controls the bidirectional DC-DC converters 22 & 25 to work to provide pulse width modulation signals to the switch transistors Q2 & Q4, and charge the rechargeable battery 24 by using the electric energy in the energy storage capacitor 23. Since the rechargeable battery 24 is charged by using 6 KW power via the bidirectional DC-DC converters 22 & 25 collectively, the bidirectional DC-DC converters 22 & 25 with lower power (e.g. 3 KW) may be selected.

It can be seen from the above embodiments that bidirectional DC-DC converters 22 & 25 with lower power (relative to output power) may be selected in the present invention, thus reducing the size, weight and cost of the combined DC-DC converter 2.

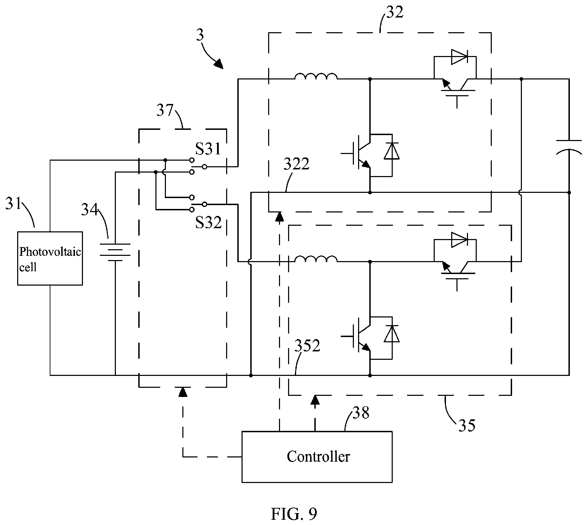

FIG. 9 is a circuit diagram of a hybrid power supply system according to embodiment 2 of the present invention. The hybrid power supply system is substantially the same as that in FIG. 2. The difference lies in that the negative electrode of the photovoltaic cell 31 and the negative electrode of the rechargeable battery 34 are connected to the negative electrode input ends 322 & 352 of the bidirectional DC-DC converters 32 & 35. The combined DC-DC converter 3 comprises a switch group 37 and bidirectional DC-DC converters 32 & 35. A controller 38 controls the on/off mode of switches S31 & S32 in the switch group 37 and the working modes of the bidirectional DC-DC converters 32 & 35 in a way basically the same as that in FIG. 2, which will not be described herein again.

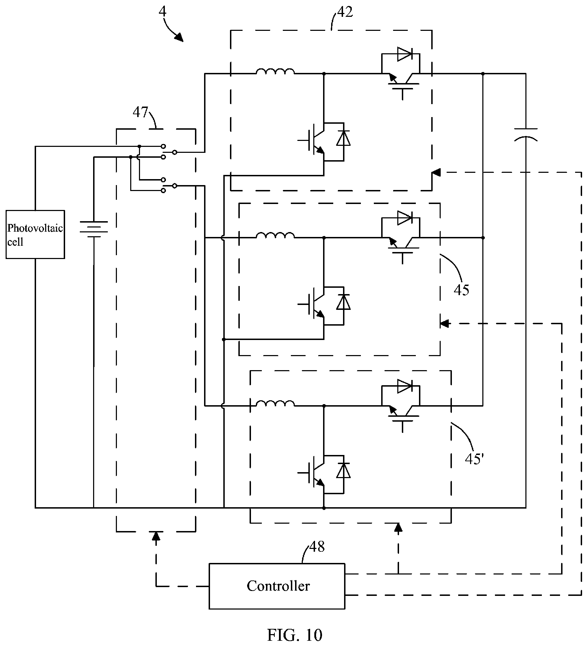

FIG. 10 is a circuit diagram of a hybrid power supply system according to embodiment 3 of the present invention. The hybrid power supply system is substantially the same as that in FIG. 9. The difference lies in that the combined DC-DC converter 4 further comprises a bidirectional DC-DC converter 45' connected in parallel to the bidirectional DC-DC converter 45, namely, the input end and output end of the bidirectional DC-DC converter 45' are respectively connected to the input end and output end of the bidirectional DC-DC converter 45; and the controller 48 controls the bidirectional DC-DC converters 45' & 45' to be in the same working mode, namely, provides the same pulse width modulation signal to the corresponding switch transistors in the bidirectional DC-DC converters 45 & 45', such that the bidirectional DC-DC converters 45 & 45' with lower power may be selected. The controller 48 controls the on/off mode of the switch group 47 and the working mode of the bidirectional DC-DC converters 42 & 45 in a way basically the same as that in FIG. 9, which will not be described herein again.

A person skilled in the art can know that, in other embodiments, when the voltages at the two ends of the photovoltaic cell 21 and the rechargeable battery 24 are higher than the predetermined DC bus voltage, the output ends of the bidirectional DC-DC converters 22 & 25 are connected to the photovoltaic cell 21 and the rechargeable battery 24 by the switch group 27, the positive electrode input end 221 and the negative electrode input end of the bidirectional DC-DC converter 22 are connected to the two ends of the energy storage capacitor 23, and the positive electrode input end 251 and the negative electrode input end 252 of the bidirectional DC-DC converter 25 are connected to the two ends of the energy storage capacitor 23.

In another embodiment of the present invention, the combined DC-DC converter 2 further comprises one or a plurality of bidirectional DC-DC converters connected in parallel to the bidirectional DC-DC converter 22. In another embodiment of the present invention, the combined DC-DC converter 2 further comprises one or a plurality of bidirectional DC-DC converters connected in parallel to the bidirectional DC-DC converter 25.

It is not limited that the bidirectional DC-DC converter in the present invention consists of one inductor and two switch transistors with anti-parallel diodes. In other embodiments of the present invention, any other bidirectional DC-DC converter in the prior art may also be adopted.

Although the present invention has been described through preferred embodiments, the present invention is not limited to the embodiments described herein, but includes various changes and variations made without departing from the scope of the present invention.

## Claims

1. A combined DC-DC converter for use in a hybrid power supply system, the hybrid power supply system comprising a renewable energy power generation device, a rechargeable battery, an energy storage capacitor, and an inverter connected to the energy storage capacitor, wherein the combined DC-DC converter comprises:
a first bidirectional DC-DC converter and a second bidirectional DC-DC converter, output ends of the first and second bidirectional DC-DC converters being configured to be connected to the energy storage capacitor; and
a switch group configured to connect input ends of the first and second bidirectional DC-DC converters to the two ends of the renewable energy power generation device or the rechargeable battery, or respectively connect the input ends of the first and second bidirectional DC-DC converters to the two ends of the renewable energy power generation device and the rechargeable battery.

2. The combined DC-DC converter for use in the hybrid power supply system according to claim 1, wherein the switch group comprises:
a first switch configured to connect the positive electrode input end of the first bidirectional DC-DC converter to the positive electrode of the renewable energy power generation device or the rechargeable battery; and
a second switch configured to connect the positive electrode input end of the second bidirectional DC-DC converter to the positive electrode of the renewable energy power generation device or the rechargeable battery.

3. The combined DC-DC converter for use in the hybrid power supply system according to claim 2, wherein the switch group further comprises:
a third switch configured to connect the negative electrode input end of the first bidirectional DC-DC converter to the negative electrode of the renewable energy power generation device or the rechargeable battery; and
a fourth switch configured to connect the negative electrode input end of the second bidirectional DC-DC converter to the negative electrode of the renewable energy power generation device or the rechargeable battery.

4. The combined DC-DC converter for use in the hybrid power supply system according to claim 1, wherein the first bidirectional DC-DC converter is the same as the second bidirectional DC-DC converter.

5. The combined DC-DC converter for use in the hybrid power supply system according to claim 4, wherein the bidirectional DC-DC converter comprises:
an inductor;
a first switch transistor with a first anti-parallel diode; and
a second switch transistor with a second anti-parallel diode, wherein
one end of the inductor is connected to the cathode of the first anti-parallel diode and the anode of the second anti-parallel diode.

6. The combined DC-DC converter for use in the hybrid power supply system according to claim 5, wherein the other end of the inductor and the anode of the first anti-parallel diode are connected to the input end of the first bidirectional DC-DC converter, and the cathode of the second anti-parallel diode and the anode of the first anti-parallel diode are connected to the output end of the first bidirectional DC-DC converter.

7. The combined DC-DC converter for use in the hybrid power supply system according to any one of claims 1-6, wherein the combined DC-DC converter for use in the hybrid power supply system further comprises a controller used for controlling the on/off state of the switch group and the working mode of the first and second bidirectional DC-DC converter.

8. The combined DC-DC converter for use in the hybrid power supply system according to claim 7, wherein when the renewable energy power generation device is capable of providing the power required by a load, the controller is used for:
controlling the switch group such that the input ends of the first and second bidirectional DC-DC converters are connected to the two ends of the renewable energy power generation device; and
controlling the first and second bidirectional DC-DC converters to convert the voltage at the two ends of the renewable energy power generation device into a predetermined DC bus voltage.

9. The combined DC-DC converter for use in the hybrid power supply system according to claim 7, wherein when the renewable energy power generation device is not capable of providing the power required by a load and the rechargeable battery has electric energy, the controller is used for:
controlling the switch group such that the input ends of the first and second bidirectional DC-DC converters are respectively connected to the two ends of the renewable energy power generation device and the rechargeable battery; and
controlling the first bidirectional DC-DC converter to convert the voltage at the two ends of the renewable energy power generation device into a predetermined DC bus voltage, and controlling the second bidirectional DC-DC converter to convert the voltage at the two ends of the rechargeable battery into the predetermined DC bus voltage.

10. The combined DC-DC converter for use in the hybrid power supply system according to claim 7, wherein when the renewable energy power generation device is not capable of providing electric energy and the rechargeable battery has electric energy, the controller is used for:
controlling the switch group such that the input ends of the first and second bidirectional DC-DC converters are connected to the two ends of the rechargeable battery; and
controlling the first and second bidirectional DC-DC converters to convert the voltage at the two ends of the rechargeable battery into a predetermined DC bus voltage.

11. The combined DC-DC converter for use in the hybrid power supply system according to claim 7, wherein when the output power of the renewable energy power generation device is greater than the power of a load and the electric energy of the rechargeable battery is less than a predetermined threshold, the controller is used for:
controlling the switch group such that the input ends of the first and second bidirectional DC-DC converters are respectively connected to the two ends of the renewable energy power generation device and the rechargeable battery; and
controlling the first bidirectional DC-DC converter to convert the voltage at the two ends of the renewable energy power generation device into a predetermined DC bus voltage, and controlling the second bidirectional DC-DC converter to charge the rechargeable battery.

12. The combined DC-DC converter for use in the hybrid power supply system according to claim 7, the hybrid power supply system comprising a bypass switch connected in series to an AC power supply, wherein when the renewable energy power generation device has electric energy and the electric energy in the rechargeable battery is less than a predetermined threshold, the controller is used for:
controlling the switch group such that the input ends of the first and second bidirectional DC-DC converters are respectively connected to the two ends of the renewable energy power generation device and the rechargeable battery;
controlling the bypass switch to be turned on such that the AC power in the AC power supply is rectified and then stored in the energy storage capacitor; and
controlling the first bidirectional DC-DC converter to convert the voltage at the two ends of the renewable energy power generation device into a predetermined DC bus voltage, and controlling the second bidirectional DC-DC converter to charge the rechargeable battery by using the electric energy in the energy storage capacitor.

13. The combined DC-DC converter for use in the hybrid power supply system according to claim 7, the hybrid power supply system comprising a bypass switch connected in series to an AC power supply, wherein when the renewable energy power generation device is not capable of providing electric energy and the electric energy in the rechargeable battery is less than a predetermined threshold, the controller is used for:
controlling the switch group such that the input ends of the first and second bidirectional DC-DC converters are connected to the two ends of the rechargeable battery;
controlling the bypass switch to be turned on such that the AC power in the AC power supply is rectified and then stored in the energy storage capacitor; and
controlling the first and second bidirectional DC-DC converters to charge the rechargeable battery by using the electric energy in the energy storage capacitor.

14. The combined DC-DC converter for use in the hybrid power supply system according to claim 7, wherein the combined DC-DC converter further comprises:
a third bidirectional DC-DC converter connected in parallel to the first bidirectional DC-DC converter, the controller controlling the first and third bidirectional DC-DC converters in the same working mode; or
a fourth bidirectional DC-DC converter connected in parallel to the second bidirectional DC-DC converter, the controller controlling the second and fourth bidirectional DC-DC converters in the same working mode.
